# EUROPÄISCHE PATENTANMELDUNG

(11) **EP 1 925 417 A1**
(43) Veröffentlichungstag der Anmeldung: **28.05.2008**
(21) Anmeldenummer: 07121425.8
(22) Anmeldetag: 23.11.2007
(51) Int. Cl.: B29C 44/12

(54) **Verfahren zur Herstellung von Verbundprofilen**

(30) Priorität: 27.11.2006 EP 06124790
(71) Anmelder: BASF SE, 67056 Ludwigshafen (DE)
(72) Erfinder: Tomasi, Gianpaolo Elastogran GmbH, 49356 Diepholz (DE); Deters, Heiner Elastogran GmbH, 49456 Bakum (DE)
(74) Vertreter: Karg, Jochen

(57) **Zusammenfassung**

Gegenstand der Erfindung ist ein Verfahren zur Herstellung von Verbundprofilen zwei Metallschalen, die mit Kunststoff-Stegen verbunden sind, und einem Kern aus Polyurethan-Hartschaumstoff, umfassend die Schritte
a) Einbringen der flüssigen Ausgangskomponenten des Polyurethan-Hartschaumstoffs, bestehend aus einem Polyisocyanat i) und mindestens einer Verbindung mit mindestens zwei mit Isocyanatgruppen reaktiven Wasserstoffatomen ii), in das Verbundprofil, wo sie zum Schaum aushärten
b) Lackierung der Außenfläche des Verbundprofils mittels Pulverlack oder Einbrennlack,

dadurch gekennzeichnet, dass der Polyurethan-Hartschaumstoff mindestens einen mineralischen Füllstoff enthält.

## Beschreibung

Gegenstand der Erfindung ist ein Verfahren zur Herstellung von Verbundprofilen aus Metallschalen, Kunststoffstegen und einem Kern aus Polyurethan-Hartschaumstoff, wie sie beispielsweise für Fenster- und Türrahmen eingesetzt werden.

Polyurethan-Hartschaumstoffe sind seit langem bekannt und vielfach in der Literatur beschrieben. Ihr Einsatz erfolgt beispielsweise zur Wärmedämmung in Kühlgeräten, zur Herstellung von Verbundelementen, auch als Sandwich-Elemente bezeichnet, sowie im Bauwesen.

Ein Einsatzgebiet für Polyurethan-Hartschaumstoffe ist die Herstellung von Verbundprofilen, wie sie beispielsweise für Fenster- oder Türrahmen verwendet werden. Dabei wird aus zwei Metallschalen, beispielsweise aus Aluminium, und zwei Kunststoffstegen, beispielweise aus Polyamid, ein Hohlprofil hergestellt, in das die flüssigen Ausgangskomponenten des Polyurethan-Hartschaums appliziert werden, wo sie dann zum Schaum aushärten. Nach der Aushärtung des Schaums werden die Verbundelemente lackiert. Zur Lackierung werden üblicherweise Pulver- oder Einbrennlacke verwendet. Diese Lackierung erfolgt bei hoher Temperatur, zumeist im Bereich von 200 °C, was zu einer Verformung der Verbundelemente führen kann.

Ein Verfahren zur Herstellung derartiger Verbundelemente wird in DE 100 35 649 beschrieben. Das Problem der Verformung der Profile durch die Lackierung wird dadurch gelöst, dass der Hohlraum zwischen die Metallschalen und die Polyamidstege nur zum Teil mit Polyurethan-Schaumstoffe gefüllt wird. Durch die nur teilweise Befüllung der Profile mit dem Schaumstoff kann es zu einer Verschlechterung der Wärmedämmung der Profile kommen.

US 5,391,436 beschreibt Metallrahmen für Fenster und Türen, die Polyurethan-Schaumstoffe zur Wärmeisolierung enthalten. Um den Schrumpf zu vermindern und die Haftung zu verbessern, enthalten die Polyurethan-Schaumstoffe Füllstoffe, wie Glasfasern, Glaskugeln, Wollastonit, hydrophobe Silikate und keramische Füllstoffe.

GB 2 357 111 beschreibt Rahmen für Feuerschutztüren. Diese bestehen aus einem Metallrahmen, der mit einem flammgeschützten Polyurethan-Hartschaum gefüllt ist. Als Flammschutzmittel werden Silikate oder Blähgraphit eingesetzt. Eine Lackierung der Rahmen ist nicht beschrieben.

WO 2005/066249 beschreibt einen Polyurethan-Dosenschaum, der mineralische Beimengungen enthält. Dieser Schaum sollte feuerbeständiger, beständiger gegen UV-Strahlen, schalldämmend, biologisch abbaubar und kostengünstig sein.

Es war die Aufgabe der vorliegenden Erfindung, Verbundprofile mit Metallschalen, Kunststoffstegen und einem Kern aus Polyurethan-Hartschaumstoff bereitzustellen, die bei hohen Temperaturen lackiert werden können, ohne dass es zu einer Verformung der Verbundelemente kommt.

Die Erfindung konnte überraschenderweise gelöst werden, indem man dem Polyurethan-Hartschaumstoff einen mineralischen Füllstoff zusetzt.

Gegenstand der Erfindung ist demzufolge ein Verfahren zur Herstellung von Verbundprofilen aus Metallschalen, Kunststoffstegen und einem Kern aus Polyurethan-Hartschaumstoff, umfassend die Schritte
a) Einbringen der flüssigen Ausgangskomponenten des Polyurethan-Hartschaumstoffs, bestehend aus einem Polyisocyanat i) und mindestens einer Verbindung mit mindestens zwei mit Isocyanatgruppen reaktiven Wasserstoffatomen ii) in das Verbundprofil, wo sie zum Schaum aushärten,
b) Lackierung der Außenfläche des Verbundprofils mittels Pulverlack oder Einbrennlack,
dadurch gekennzeichnet, dass der Polyurethan-Hartschaumstoff mindestens einen mineralischen Füllstoff enthält.

Die mineralischen Füllstoffe werden vorzugsweise in einer Menge von 5 bis 70 Gew.-%, insbesondere von 10 bis 60 Gew.-%, jeweils bezogen auf das Gewicht des Füllstoffe enthaltenden Polyurethan-Hartschaumstoffs, eingesetzt.

Als mineralische Füllstoffe können prinzipiell alle gegenüber den Ausgangskomponenten und dem fertigen Schaum inerten mineralischen Verbindungen eingesetzt werden.

Vorzugsweise werden als mineralische Füllstoffe Silikate und/oder Oxide, Sulfate oder Carbonate von Erdalkalimetallen eingesetzt.

Als Silikate werden insbesondere Alkali-Aluminium-Silikate eingesetzt.

Prinzipiell können auch sämtliche inerten Oxide, Sulfate und Carbonate von Erdalkalimetallen als Füllstoffe eingesetzt werden. Nach Möglichkeit werden solche Verbindungen ausgewählt, die eine geringe Wasserlöslichkeit aufweisen. Bevorzugt eingesetzt werden Carbonate und Sulfate von Erdalkalimetallen, wobei das Calciumcarbonat besonders bevorzugt ist.

Die mineralischen Füllstoffe können allein oder als Mischung verschiedener Verbindungen eingesetzt werden.

Die Partikelgröße der mineralischen Füllstoffe ist so zu wählen, dass es zu keiner Beeinträchtigung bei der Herstellung der Polyurethan-Schaumstoffe kommt, insbesondere dass Verstopfungen und Absetzungen in den Vorrichtungen zur Herstellung der Schaumstoffe, wie Mischköpfen oder Zuleitungen, vermieden werden. Weiterhin ist die Partikelgröße der mineralischen Füllstoffe so zu wählen, dass die Schaumstoffe eine regelmäßige Zellstruktur aufweisen.

Die Füllstoffe können vor der Umsetzung den Ausgangskomponenten des Polyurethan-Schaumstoffs zugesetzt werden. Hierbei können die Füllstoffe den Polyisocyanaten i), den Verbindungen mit mindestens zwei mit Isocyanatgruppen reaktiven Wasserstoffatomen ii) oder beiden Komponenten zugesetzt werden. Die letztgenannte Ausführungsform kommt insbesondere dann zur Anwendung, wenn große Anteile an mineralischen Füllstoffen eingesetzt werden, da bei einer zu großen Menge an mineralischen Füllstoffen in einer der Ausgangskomponenten Absetzungen auftreten können. Generell sollten die mineralischen Füllstoffe bei Zusatz in die Ausgangskomponenten der Polyurethan-Schaumstoffe in einer solchen Menge und Partikelgröße vorliegen, dass die Komponenten rührfähig sind und keine signifikante Entmischung auftritt.

Vor der Verarbeitung sollten die Komponenten zusätzlich aufgerührt werden, um die Verteilung der mineralischen Füllstoffe zu verbessern.

In einer weiteren Ausführungsform des erfindungsgemäßen Verfahrens werden die mineralischen Füllstoffe den Ausgangskomponenten erst unmittelbar vor der Herstellung des Polyurethan-Schaumstoffs zugesetzt. Dies kann beispielsweise durch Zuführung der mineralischen Füllstoffe zum Produktstrom zur Verschäumung erfolgen, vorzugsweise mit einem dynamischen Mischer. In einer weiteren Ausgestaltung dieser Ausführungsform kann der mineralische Füllstoff auch direkt dem Mischkopf zugeführt werden. In allen diesen Ausführungsformen kann der mineralische Füllstoff als Substanz oder in Form eines Masterbatches zugeführt werden. Für die Herstellung des Masterbatches wird dabei vorzugsweise die Komponente eingesetzt, in die der mineralische Füllstoff eindosiert wird.

Die zur Herstellung der Verbundprofile eingesetzten Metallschalen bestehen zumeist aus Stahl oder Aluminium. Ihre Herstellung erfolgt üblicherweise durch mechanische Formgebung. Die Größe der Metallschale hängt von der gewünschten Größe der Fenster- und Türrahmen ab. Die eingefügten Kunststoffstege, zumeist aus Polyamid oder ASA, bilden einen Hohlraum zwischen den Metallschalen, in den der Polyurethan-Schaum eingebracht und der anschließend verschlossen wird.

Nach der Formgebung erfolgt das Einbringen des Polyurethan-Schaums in das Verbundprofil. Dies erfolgt, indem die Polyisocyanate i) mit den Verbindungen mit mindestens zwei mit Isocyanatgruppen reaktiven Wasserstoffatomen ii) vermischt und danach in das Verbundprofil eingebracht werden, wo sie zum Polyurethan-Schaum aushärten. Die Dosierung erfolgt üblicherweise, wie auch oben beschrieben, mittels üblicher Dosiervorrichtungen, zumeist mittels Mischköpfen. Die Menge des Schaumstoffs ist so zu bemessen, dass das Verbundprofil vollständig ausgefüllt wird, es jedoch nicht zu einem so hohen Druckaufbau kommt, dass das Verbundprofil zerstört oder verformt wird.

Nach dem Aushärten des Polyurethan-Schaums wird das Verbundprofil lackiert. Zum Lackieren werden, wie beschrieben, Einbrennlacke oder Pulverlacke verwendet, die eine höhere Kratzfestigkeit aufweisen.

Einbrennlacke sind üblicherweise Lacke auf der Basis von Acryl-, Epoxid-, Phenol-, Melamin-, Harnstoff-, Silicon-, Polyurethanharzen, die allein oder in Kombinationen miteinander oder mit einem meist blockierten Härter, beispielsweise blockierten Polyisocyanaten, bei höherer Temperatur, vorzugsweise im Bereich von 100 bis 250 °C gehärtet werden. Die Härtung erfolgt aufgrund von Vernetzungsreaktionen durch die Aktivierung der in den Molekülen dieser Verbindungen vorhandenen Doppelbindungen oder durch Reaktion verschiedener funktioneller Gruppen miteinander. Nur in Ausnahmefällen setzt man auch Trockenstoffe zu. In der Praxis werden Einbrennlacke auf den Werkstücken in Einbrennöfen oder Trockenöfen verschiedener Dimension unter festgelegten Einbrennbedingungen gehärtet. Teilweise werden zur Wärmeerzeugung Infrarotstrahler oder auch Vorrichtungen eingesetzt, die auf der Basis elektromagnetischer Induktion arbeiten.

Flüssige Einbrennlacke können sowohl lösemittelbasierende als auch Wasserlacke, pigmentierte, transparente oder Klarlacke sein. Bevorzugte Bindemittel in Einbrennlacken sind Alkyd-, Polyester-, Acryl- oder Epoxidharze in Kombination mit Melaminharzen, Aminen oder Polyisocyanaten als Vernetzer.

Die Einstellung der Einbrennlacke auf die Verarbeitungskonsistenz erfolgt mit organischen Lösemitteln bzw. mit Wasser, dem kleine Mengen Propan-2-ol, Butanol oder andere Alkohole beigemischt sind.

Unter Pulverlacken versteht man pulverförmige, lösemittelfreie Beschichtungsstoffe, die nach dem Schmelzen und gegebenenfalls Einbrennen eine Beschichtung ergeben. Sie werden in Pulverform vorwiegend auf metallische Substrate aufgetragen. Zumeist versteht man unter Pulverlacken duroplastische Systeme. Die filmbildende Phase der Pulverlacke setzt sich aus Bindemitteln, Reaktionspartnern für diese Bindemittel, auch als Härter bezeichnet, Füllstoffen, Pigmenten und Additiven zusammen. Die verwendeten Bindemittel und Härter bestimmen dabei im wesentlichen die generellen Eigenschaften des Pulverlacks und damit auch sein bevorzugtes Anwendungsgebiet.

Pulverlacke basieren zumeist auf Epoxidharzen, Epoxidharz/Polyester-Gemischen, Polyestern, Polyester/Isocyanat-Gemischen und Acrylaten. Die daraus gefertigten Pulverlacke heißen Epoxidharz-, Epoxidharz/Polyester-, Polyester-, Polyurethan- oder Acrylat-Pulverlacke.

Danach kann das Verbundprofil als Fenster- oder Türrahmen verwendet werden.

Zur Herstellung des Polyurethan-Hartschaumstoffs und den dafür die eingesetzten Ausgangsverbindungen ist im einzelnen Folgendes zu sagen.

Als organische Polyisocyanate i) kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylenpolymethylenpolyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25 °C im Bereich von 150 bis 1000 mPa s.

Als Verbindungen mit mindestens zwei gegenüber Isocyanaten reaktiven Wasserstoffatomen ii) kommen insbesondere Polyetheralkohole und/oder Polyesteralkohole mit Hydroxylzahlen im Bereich von 100 bis 1200 mgKOH/g zum Einsatz.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyetheralkohole haben zumeist eine Funktionalität zwischen 2 und 8, insbesondere 3 bis 8.

Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Zu den Verbindungen mit mindestens zwei gegenüber Isocyanat reaktiven Wasserstoffatomen ii) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente ii), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Das erfindungsgemäße Verfahren wird üblicherweise in Anwesenheit von Treibmitteln, Katalysatoren sowie falls erforderlich weiteren Hilfs- und/oder Zusatzstoffen durchgeführt.

Als Treibmittel kann Wasser und/oder Ameisensäure verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden

Als Flammschutzmittel können im allgemeinen die aus dem Stand der Technik bekannten Flammschutzmittel verwendet werden. Geeignete Flammschutzmittel sind beispielsweise bromierte Ether (Ixol), bromierte Alkohole wie Dibromneopentylalkohol, Tribromneopentylalkohol und PHT-4-Diol sowie chlorierte Phosphate wie z. B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, roten Phosphor enthaltende Zurichtungen, Ammoniumpolyphosphat oder Cyanursäurederivate, wie Melamin, oder Mischungen aus mindestens zwei Flammschutzmitteln, wie z. B. Ammoniumpolyphosphaten und Melamin sowie gegebenenfalls Stärke zum Flammfestmachen der Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung vorzugsweise in einer Menge von 0 bis 65 Gew.-%, bevorzugt von 5 bis 60 Gew.-%, mehr bevorzugt von 5 bis 50 Gew.-%, bezogen auf das Gesamtgewicht der Polyolkomponente ii) verwendet.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine, wie z. B. tertiäre aliphatische Amine, Imidazole, Amidine, sowie Alkanolamine, oder organische Metallverbindungen, vorzugsweise organische Zinnverbindungen.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate i) und die Polyolkomponente ii) in solchen Mengen zur Umsetzung gebracht, dass der Isocyanatindex in einem Bereich zwischen 90 und 700, vorzugsweise zwischen 100 und 500, liegt.

Üblicherweise werden die erfindungsgemäßen Polyurethan-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen ii), mit den Treibmitteln, den Katalysatoren sowie den weiteren Hilfs- und/oder Zusatzstoffen zu einer Polyolkomponente vermischt und diese mit den Polyisocyanaten i) zur Umsetzung gebracht.

Die Ausgangskomponenten werden zumeist bei einer Temperatur von 15 bis 35 °C, vorzugsweise von 20 bis 30 °C gemischt. Das Reaktionsgemisch kann mit Hoch- oder Niederdruckdosiermaschinen in die Verbundprofile eingebracht werden.

Überraschenderweise zeigen die für das erfindungsgemäße Verfahren eingesetzten Polyurethan-Hartschaumstoffe bei der Lackierung keinerlei Aufblähungen des Polyurethan-Hartschaumstoffs. Die zugesetzten mineralischen Füllstoffe haben keinerlei negative Auswirkungen auf die Verarbeitung und die Gebrauchseigenschaften der Polyurethan-Hartschaumstoffe.

Die Erfindung soll an den nachfolgenden Beispielen näher erläutert werden.

### Beispiel

Die unten aufgeführten Komponenten wurden zu einer Polyolkomponente vermischt.

53,9 Gew.-Teile eines Polyetherpolyols mit einer OHZ von 400 mg KOH/g, basierend auf Propylenoxid und Saccharose als Starter.
10 Gew.-Teile eines Polyetherpolyols mit einer OHZ von 490 mg KOH/g basierend auf Propylenoxid und Saccharose als Starter.
20 Gew.-Teile eines Polyetherpolyols mit einer OHZ von 100 mg KOH/g basierend von Propylenoxid und Propylenglycol als Starter.
2 Gew.-Teile Glycerol
1 Gew.-Teil Stabilisator auf Silikonbasis (B 8443 der Fa. Goldschmidt)
1,3 Gew.-Teile Dimethylcyclohexylamin
1,8 Gew.-Teile Wasser
10 Gew.-Teile Treibmittel 245fa

Als Isocyanatkomponente wurde Polymer-MDI (Lupranat® M20S der BASF AG) mit einem NCO-Gehalt von 31 % verwendet.

Polyolkomponente und Isocyanatkomponente wurden mit einem Isocyanatindex von 115 auf einer Klöckner-Desma Niederdruck-Anlage zur Umsetzung gebracht.

Das beschriebene System mit verschiedenen Zugabemengen Calciumcarbonat gefahren. Als Vergleich wurde das System auch ohne Zugabe von Füllstoffen getestet. Die mechanischen und physikalischen Eigenschaften sind in Tabelle 1 beschrieben.

**Tabelle 1 zeigt, dass mit zunehmenden Füllstoffanteil eine Verbesserung der Druckfestigkeit erreicht wird. Die anderen mechanischen Eigenschaften werden nicht negativ beeinflusst. Die Wärmeleitfähigkeit wird nur minimal negativ beeinflusst. Dies ist bei dem vorliegenden Einsatzfall zu tolerieren.**

| Tabelle 1 | % Calciumcarbonat | | | |
|---|---|---|---|---|
| | 0 | 35 | 45 | 50 |
| Kernrohdichte (kg/m³) | 45,7 | 72,2 | 89,6 | 100,3 |
| Druckfestigkeit (N/mm²) | 0,27 | 0,35 | 0,36 | 0,38 |
| Stauchung (%) | 7,1 | 7,8 | 4,0 | 5,3 |
| Geschlossenzelligkeit (%) | 94 | 94 | 94 | 94 |
| Wärmeleitfähigkeit (mW/mK) | 22,3 | 25,9 | 26,1 | 27,4 |
| Dim. Stabilität bei 100 °C (%) | | | | |
| Höhe | -0,3 | -0,8 | -0,6 | -0,7 |
| Breite | -2,1 | -0,9 | -2,0 | -0,5 |
| Länge | -1,2 | -1,1 | -1,0 | -0,5 |
| Zellstruktur | fein | fein | fein | fein |

Weiterhin wurden mit den beschriebenen Polyurethan-Hartschaumstoffen Aluminium-Polyamid-Verbundprofile mit einer Höhe von 3 cm und einer Breite von 6 cm gefertigt und einer Pulverlackierung unterzogen. Die Verformungen nach dem zur Pulverlackierung notwendigen Tempern sind in Tabelle 2 dargestellt.

**Tabelle 2 zeigt, dass die Deformation nach der Pulverlackierung mit steigender Menge an Calciumcarbonat drastisch abnimmt.**

| Tabelle 2 | % Calciumcarbonat | | | |
|---|---|---|---|---|
| | 0 | 35 | 45 | 50 |
| Verformung nach Pulverlackierung (mm) | >2 | 0,55 | 0,10 | 0,05 |

Die Verformung wurde an der Breite der Profile bestimmt.

## Patentansprüche

1. Verfahren zur Herstellung von Verbundprofilen aus zwei Metallschalen, die mit Kunststoffstegen verbunden sind, und einem Kern aus Polyurethan-Hartschaumstoff, umfassend die Schritte
a) Einbringen der flüssigen Ausgangskomponenten des Polyurethan-Hartschaumstoffs, bestehend aus einem Polyisocyanat i) und mindestens einer Verbindung mit mindestens zwei mit Isocyanatgruppen reaktiven Wasserstoffatomen ii), in das Verbundprofil, wo sie zum Schaum aushärten
b) Lackierung der Außenfläche des Verbundprofils mittels Pulverlack oder Einbrennlack,
**dadurch gekennzeichnet, dass** der Polyurethan-Hartschaumstoff mindestens einen mineralischen Füllstoff enthält.

2. Verfahren nach Anspruch 1, **dadurch gekennzeichnet, dass** der mineralische Füllstoff ein Oxid, Sulfat oder Carbonat eines Erdalkalimetalls ist.

3. Verfahren nach Anspruch 1, **dadurch gekennzeichnet, dass** der mineralische Füllstoff Calciumcarbonat ist.

4. Verfahren nach Anspruch 1, **dadurch gekennzeichnet, dass** der mineralische Füllstoff ein Silikat ist.

5. Verfahren nach Anspruch 1, **dadurch gekennzeichnet, dass** der mineralische Füllstoff in einer Menge von 5 bis 70 Gew.-%, bezogen auf das Gewicht des Füllstoffe enthaltenden Schaums, zugesetzt wird.

6. Verfahren nach Anspruch 1, **dadurch gekennzeichnet, dass** der mineralische Füllstoff dem Polyisocyanat i) zugesetzt wird.

7. Verfahren nach Anspruch 1, **dadurch gekennzeichnet, dass** der mineralische Füller der Verbindung mit mindestens zwei mit Isocyanatgruppen reaktiven Wasserstoffatomen ii) zugesetzt wird.

8. Verfahren nach Anspruch 1, **dadurch gekennzeichnet, dass** der mineralische Füllstoff den Komponenten i) und/oder ii) unmittelbar vor der Verschäumung im Mischkopf zugesetzt wird.

9. Verfahren nach Anspruch 1, **dadurch gekennzeichnet, dass** Schritt b) bei einer Temperatur von 100 bis 250 °C durchgeführt wird.

10. Verbundprofile mit einem Kern aus Polyurethan-Hartschaumstoff, **dadurch gekennzeichnet, dass** der Polyurethan-Hartschaumstoff mindestens einen mineralischen Füllstoff enthält.
